# EUROPÄISCHE PATENTSCHRIFT

(11) **EP 3 954 082 B1**
(45) Veröffentlichungstag und Bekanntmachung des Hinweises auf die Patenterteilung: **10.09.2025**
(21) Anmeldenummer: 20717832.8
(22) Anmeldetag: 06.04.2020
(51) Int. Cl.: H04L 9/08, H04L 9/32, H04L 9/00, H04L 9/40

(54) **VERFAHREN ZUM SICHEREN AUSTAUSCH VON VERSCHLÜSSELTEN NACHRICHTEN**
METHOD FOR SECURELY EXCHANGING ENCRYPTED MESSAGES
PROCÉDÉ POUR L'ÉCHANGE SÛR DE MESSAGES CHIFFRÉS

(30) Priorität: 09.04.2019 DE 102019109341
(43) Veröffentlichungstag der Anmeldung: 16.02.2022
(73) Patentinhaber: Roider, Oliver, 93164 Laaber (DE); Roider, Nicolai, 93164 Laaber (DE)
(72) Erfinder: SCHREINER, Sebastian, 93164 Laaber (DE); ROIDER, Nicolai, 93164 Laaber (DE)
(74) Vertreter: Glück Kritzenberger Patentanwälte PartGmbB
(86) Internationale Anmeldenummer: PCT/EP2020/059750
(87) Internationale Veröffentlichungsnummer: WO 2020/207965

(56) Entgegenhaltungen:
- US-A1- 2006 143 453
- US-A1- 2010 241 847
- US-B2- 8 707 052
- "Blockchain: Blueprint for a New Economy", 8 February 2015, O'REILLY, ISBN: 978-1-4919-2049-7, article MELANIE SWAN: "Blockchain: Blueprint for a New Economy", XP055279098

## Beschreibung

Die vorliegende Erfindung betrifft ein Verfahren zum sicheren Austausch von verschlüsselten Nachrichten zwischen einem Sender und einem Empfänger unter Nutzung einer Verschlüsselungsautorität (VA).

Die US 2006/0143453 A1 beschreibt ein Verfahren zur Authentifizierung von Clients, ist aber an der Verschlüsselung von Informationen zwischen den Clients nicht beteiligt. In einer Zeit, in der die Angriffe auf Daten immer mehr zunehmen, ist es ein besonderes Anliegen der Erfindung den zugriffssensiblen Datenaustausch zwischen einem Sender und einem Empfänger sicherer zu machen.

Erfindungsgemäß wird dies mit einem Verfahren mit den Merkmalen des Anspruchs 1 gelöst. Vorteilhafte Weiterbildungen des Verfahrens sind Gegenstand der abhängigen Ansprüche.

In dem Verfahren tauschen der Sender und Empfänger vor einem ersten Datenaustausch einen gemeinsamen Genesishash aus, der die Basis für die nachfolgenden Verschlüsselungen darstellt. Bei weiteren Datentransaktionen wird dann jeweils der letzte bestätigte Hash zwischen Sender und Empfänger verwendet.

Das Verfahren verwendet die bei Kryptowährungen bekannte Blockchain-Technologie, um eine chronologische Authentizität der zwischen Sender und Empfänger ausgetauschten Daten zu gewährleisten. Die führt dazu, dass eine nachträgliche Veränderung der Daten der Blockchain sofort eine Integritätsverletzung nach sich ziehen würde, womit derartige Angriffe wirksam unterbunden werden können.

Das erfindungsgemäße Verfahren zum sicheren Austausch von verschlüsselten Nachrichten zwischen einem Sender und einem Empfänger unter Nutzung einer Verschlüsselungsautorität (VA) wird wie folgt spezifiziert.

Der Sender und der Empfänger können zum Beispiel Sender und Empfänger in einem Kommunikationsnetzwerk sein. Das heißt, das erfindungsgemäße Verfahren eignet sich insbesondere zur sicheren verschlüsselten Übertragung von Daten in einem Kommunikationsnetzwerk, seien es Textdaten, Bild- oder Videodaten und/oder Audiodaten. Das Verfahren eignet sich auch zur Übertragung von Streaming-Daten. Der Sender und Empfänger können auch Hardware-Teile sein, die zueinander in Kommunikation treten, um etwas zu bewirken, wie z.B. den Zugang zu einem Bereich, einem Kraftfahrzeug oder zu einer Device, z.B. einem Smartphone.

Beispielsweise sind bei der Zugangssicherung zu einem Kraftfahrzeug der elektronische Schlüssel der Sender, das elektronische Türschloss der Empfänger und die VA ist regelmäßig in der Kfz-Steuerung angeordnet.

Im Falle der Zugangssicherung zu einem Smartphone ist der Sender die Zugangsapp mit Eingabevorrichtung, die den Zugang zum Smartphone ermöglicht. Der Empfänger ist das Betriebssystem des Smartphones und die VA ist in einem Teil des Betriebssystems der Smartphones abgelegt oder im Falle einer Funkverbindung in einem mit dem Smartphone verbundenen Server Entweder sind zwischen Sender und Empfänger bereits Daten ausgetauscht worden, dann basiert der Datenaustausch auf Daten aus dem letzten Datenaustausch, z.B. dem letzten bestätigten Hash. Falls noch kein Datenaustausch stattgefunden hat, werden zwischen dem Sender und Empfänger vor einem ersten Datenaustausch Startdaten, z.B. ein gemeinsamer Genesishash ausgetauscht, der die Basis für die nachfolgenden Verschlüsselungen darstellt.

Weiterhin umfasst das Verfahren die folgenden Schritte, vorzugsweise die Abfolge der folgenden Schritte:
a) Der Sender erfragt von der VA die Vergabe eines Tokens, welches für die Verschlüsselung der zu übertragenden Nachrichten benötigt wird.
b) Die VA erstellt das Token und schreibt dieses in einen von der VA erstellten neuen Block, welcher einer Blockchain der VA, nachfolgend main chain, angehängt wird
c) die VA gibt das erstellte Token an den Sender zurück,
d) der Sender erstellt einen Schlüssel, welcher aus dem Token und den Daten oder den Startdaten, insbesondere dem letzten bestätigten Hash oder dem Genesishash abgeleitet ist,
e) der Sender verschlüsselt unter Verwendung des Schlüssels eine Nachricht zur Übertragung an den Empfänger,
f) der Sender sichert den Hash der unverschlüsselten Nachricht in einem neuen Block seiner privaten Blockchain,
g) der Sender übermittelt die verschlüsselte Nachricht an den Empfänger.
h) der Sender erstellt den Hash der verschlüsselten Nachricht und übermittelt ihn an die VA,
i) der Empfänger übermittelt der VA den Hash der verschlüsselten Nachricht und fordert eine Integritätsbestätigung bei der VA an,
n) die VA vergleicht die Hashs von Empfänger und Sender und übermittelt das Vergleichsergebnis und das Token an den Empfänger,
o) der Empfänger berechnet im Fall der Bestätigung der Integrität durch die VA aus dem Token und dem zuletzt bestätigten Hash der unverschlüsselten Nachricht oder dem Genesishash den Schlüssel für das anschließende Entschlüsseln der Nachricht,
p) der Empfänger entschlüsselt die Nachricht anhand des Schlüssels,
q) der Empfänger sichert den Hash der unverschlüsselten Nachricht in einem Block seiner privaten Blockchain,
r) der Empfänger übermittelt eine Empfangsbestätigung für den Hash der unverschlüsselten Nachricht an den Sender und eine Empfangsbestätigung des Hashs der verschlüsselten Nachricht an die VA für weitere Datenübertragungen.

Diese Verfahren stellt sicher, dass zum einen die vom Sender abgesandten Daten identisch sind mit den vom Empfänger erhaltenen Daten. Das Verfahren stellt weiterhin sicher, dass die Daten mit jeder Datenübertragung anders verschlüsselt werden. Das Token, welches eine Basis der Verschlüsselung bildet, ist nur bei der VA gespeichert. Es wird vorzugsweise weder beim Sender noch beim Empfänger gespeichert. Auf der anderen Seite erhält die VA nur den Hash der verschlüsselten Nachricht. Weder das Hacken des Senders, des Empfängers oder der VA kann somit den Zugriff auf die übertragenen Daten ermöglichen. Durch die Verwendung von Blockchains bei der VA (main chain) und beim Sender und Empfänger (private chains) ist gewährleitstet, dass keine Änderungen in der Transaktionshistorie vorgenommen werden können und Änderungen der Daten auch im Nachgang sofort erkannt werden können. Das Datenübertragungsverfahren kann somit als Meilenstein bei der Datensicherung bezeichnet werden.

Bei dem erfindungsgemäßen Verfahren handelt es sich um einen Anwendungsaufsatz welcher die Schutzziele des Datenschutzes, insbesondere der Vertraulichkeit, sowie die Schlüsselverwaltung sicherstellt und überwacht. Das erfindungsgemäße Verfahren bietet Schnittstellen, um diese in bestehenden Anwendungen zu integrieren, wie z.B. Zugangssicherungen, Kfz-Schlüssel, Datenübertragung in Kommunikationsnetzwerken wie WhatsApp^{®}, Skype^{®}, email, Messenger. Das Verfahren kann dabei mit beliebigen Verschlüsselungsverfahren, wie z.B. Advanced Encryption Standard (AES) zusammenarbeiten. Somit lässt sich das erfindungsgemäße Verfahren in jedes Tool integrieren, um dieses noch sicherer zu machen ohne, dass der Anwender hierbei mit neuen Anwendungen konfrontiert werden muss. So lässt sich beispielsweise die Informationssicherheit einer Auftragsverwaltung durch Integration des erfindungsgemäßen Verfahren mittels echter End zu End Verschlüsselung, sowie erweiterter Integritätsüberwachung deutlich erhöhen. Das erfindungsgemäße Verfahren dient daher in erster Linie als IT Security Aufsatz bestehender Anwendungen.

Dabei bietet das erfindungsgemäße Verfahren besondere Vorteile in Hinsicht auf das Schutzziel der Vertraulichkeit:
So wird für jede Transaktion zwischen Sender und Empfänger ein neuer privater Schlüssel generiert, welcher niemals auf einen der beiden Instanzen gesichert wird. Vielmehr sichern diese Parameter, welche zur Schlüsselgenerierung notwendig sind. Sollten damit Daten einer der Instanzen (Sender, Empfänger oder Encryption Authority) bekannt werden, so genügen diese nicht, um die Chiffre zu erzeugen.

In einer vorteilhaften Weiterbildung des erfindungsgemäßen Verfahrens werden zwischen den Schritten i) und n) folgende Schritte durchgeführt:
k) der Empfänger basiert die Integritätsanfrage an die VA auf transaction tree (Merkle) Technologie,
l) die VA überprüft den transaction tree mittels der main chain,
m) die VA übermittelt das Ergebnis der Integritätsprüfung an den Empfänger.

Diese transaction tree-Verifizierung bietet eine erweiterte Überprüfung auf Integritätsverletzungen. So ist es möglich mittels des Merkle Tree Hashing Verfahren die gesamte Chain, das heißt main chain als auch private chains des Senders und Empfängers auf Verletzungen zu überprüfen. Hierbei wird nicht nur die aktuell empfange Nachricht mittels Hashwert auf Änderungen überprüft, sondern auch die gesamte Reihenfolge der Chain. Die Integritätsüberwachung wird somit verbessert und das erfindungsgemäße Verfahren eine Vielzahl, schwer zu manipulierender Schutzfunktionen zur Einhaltung der Integrität eines Drittsystems. Beim Merkle Tree Hashing handelt es sich dabei um ein sehr effizientes Verifizierungsverfahren, womit keine leistungsfordernde Überprüfung der Blockchain notwendig ist und die zu übertragende Datenmenge gering gehalten wird. Die Erfindung bietet eine Ende-zu-Ende Verschlüsselung mit ständig wechselnden Schlüsseln und damit den höchsten Sicherheitsstandard für die Datenübertragung.

In einer vorteilhaften Weiterbildung der Erfindung wird der, unter Verwendung der Hashes, berechnete Transaktion Tree verwendet, um die Reihenfolge der Blöcke zu verifizieren. Dies ermöglicht eine effiziente und datenminimierte Integritätsprüfung mittels des transaction trees.

In einer vorteilhaften Weiterbildung der Erfindung werden die Token nach einer vorbestimmten Zeit aus der main chain gelöscht. So ist es optional möglich Schlüssel nach einer gewissen Zeit zu zerstören. Es ist dann nicht mehr möglich, an die bereits vergebenen Schlüssel zu gelangen. Diese Weiterbildung macht somit das gesamte System wesentlich sicherer.

Vorzugsweise erstellt die VA das Token auf Zufallsbasis, was es unmöglich macht, den Wert des Tokens vorzubestimmen, was z.B. bei der Erstellung basierend auf einem definierten Algorithmus durchaus möglich wäre.

Vorzugsweise ermittelt die VA in Schritt b) zudem die GUID des zuletzt vom Sender bestätigten Hashs bzw. Genesishashs. Die VA gibt das erstellte Token und die GUID an den Sender zurück, und der Sender ermittelt in Schritt d) anhand der GUID den Hash der letzten unverschlüsselten Nachricht zwischen Sender und Empfänger und erstellt einen Schlüssel, welcher aus dem Token und dem letzten bestätigten Hash bzw. Genesishash abgeleitet ist. Dies macht das Verfahren einfacher und weniger rechenintensiv.

Die VA kommuniziert natürlich mit einer Vielzahl von Sendern und Empfängern. Auf diese Weise ist die main chain der VA bedeutend länger als die private chain des Senders und Empfängers. Vorzugsweise werden daher die Blöcke der main chain, die nicht den Sender oder Empfänger betreffen dem Sender und Empfänger als leere space blocks übermittelt. Dies hat den Vorteil, dass der Sender und Empfänger nicht mit Daten belastet werden, die die eigene Datenübertragung nicht betreffen. Zudem ist es dadurch unmöglich, über den Sender und Empfänger an Daten zu gelangen, die Dritte betreffen.

In einer vorteilhaften Weiterbildung der Erfindung wird anhand der aufeinanderfolgenden Blöcke ein Transaction Tree errechnet und dieser für die Überprüfung der Integrität herangezogen.

Jeder Block der main chain enthält vorzugsweise folgende Daten: Sender ID, Empfänger ID, Token, Hash GUID, Hash des vorherigen Blocks, Hash der verschlüsselten Nachricht, Bestätigungsflag. In diesen Daten sind zudem alle wichtigen IDs für den Datenaustausch vorhanden, als auch eine Bestätigung für den Übertragungsvorgang in Form des Bestätigungsflags. Wenn kein Bestätigungsflag für den Übertragungsvorgang erhalten wird, wird entweder die Übertragung wiederholt, abgebrochen oder eine Fehlerroutine gestartet, in welcher zum Beispiel der Anwender aufgefordert wird, die technischen Voraussetzungen für die Übertragung zu verifizieren.

Vorzugsweise enthält jeder Block der private chain folgende Daten: Sender ID, Hash des vorherigen Blocks, Hash der unverschlüsselten Nachricht, Bestätigungsflag. Auch hier sind in den Daten alle wichtigen IDs für den Datenaustausch vorhanden, als auch eine Bestätigung für den Übertragungsvorgang in Form des Bestätigungsflags.

Vorzugsweise fasst die VA Blöcke der main chain in Transaktion mit Dritten zu einem kombinierten Block zusammen, der mit dem Token an den Sender und Empfänger übermittelt wird. Dies reduziert die Menge der Blöcke und verringert den Rechenaufwand beträchtlich.

In einer Ausführungsform der Erfindung ist der Sender durch ein Zugangsschlüssel zu einem Bauwerk oder einem Fahrzeug gebildet ist, welcher eine Steuerung und eine drahtlose Funkverbindung zur VA und zum Empfänger enthält. Der Empfänger ist regelmäßig durch ein Fahrzeug oder eine Zugangsanordnung eines Bauwerks gebildet.

Bei dem Verfahren kann es sich auch um ein Zugangsverfahren zu einem Device, z.B. einem Smartphone handeln. Der Sender ist hier durch die Zugangsapp gebildet und der Empfänger durch das Betriebssystem des Smartphones. Die AB kann entweder in dem Betriebssystem oder durch einen Server gebildet sein, mit dem das Smartphone über das Funknetz kommuniziert, wobei in diesem Fall für den Zugang eine Funkverbindung erforderlich wäre.

Vorzugsweise enthält der Hash in dem Verfahren Informationen über die Blockchain oder den Transaction Tree, so dass die Blockchain zur Überprüfung der Integrität verwendet werden kann.

Des Weiteren ist es unter Verwendung der eigenen privaten Blockchain eines Clients (Empfänger oder Sender) möglich, jederzeit einen Integritätscheck durchzuführen. Hierfür werden die Hashwerte der unverschlüsselten Nachrichten der Chain herangezogen. So kann selbst nach einiger Zeit, nachdem die Nachrichten empfangen wurden das Hostsystem auf nachträgliche Verletzungen der Integrität überprüft werden.

Neben diesem Verfahren, ist es möglich auch durch die Blockchain des gegenüberliegenden Clients (Sender oder Empfänger) die eigene Datenbasis auf Integritätsverletzungen zu überprüfen. Dies sorgt für zusätzliche Sicherheit. Im Falle das Verfahren in einem Drittsystem, wie z.B. Messenger verwendet wird, müsste ein Angreifer zunächst die Daten der Blockchain und anschließend das Drittsystem selbst manipulieren, was Angriffe erheblich erschwert.

Des Weiteren lassen sich die obigen beiden Verfahren miteinander kombinieren, wodurch mittels zweier Instanzen die Integrität der Datenbasis auf Verletzungen überprüft wird. Somit müssten Angreifer zwei Instanzen manipulieren. Dies sorgt nochmals für erweiterte Sicherheit.

Zusammenfassend lässt sich sagen, dass das erfindungsgemäße Verfahren alles Aspekte des Datenschutzes in einem Ablauf sicherstellt.

### Vertraulichkeit

Das einzigarte Konzept des erfindungsgemäßen Verfahrens erlaubt eine Ende-zu-Ende Verschlüsselung mit ständig neu generierten Schlüsseln für jede Transaktion. Zudem werden vorzugsweise private Schlüssel nach einer individuell festgelegten Zeit zerstört.

Das erfindungsgemäße Verfahren erlaubt eine Überwachung der Integrität über einen unbestimmten Zeitraum. Mögliche Integritätskonflikte werden sofort erkannt und somit ist eine unerwünschte Änderung der Daten durch Dritte bzw. Cyberattacken zu jedem Zeitpunkt sichtbar.

### Zugriffskontrolle

Private Schlüssel können nur durch Sender und Empfänger der Transaktion errechnet werden. Andere Clients (dritte Sender und Empfänger) erhalten keinen Zugriff auf Parameter, die zur Bestimmung privater Schlüssel notwendig sind.

### Verfügbarkeit

Durch das aus der Blockchain bekannte "Distributed Ledger" Prinzip, welches nur für die Main Chain angewendet werden kann, ist es möglich ein redundantes Encryption Authority System bereitzustellen. Somit werden Schlüsseldaten vor dem Verlust geschützt.

### Unabhängigkeit des verwendeten Verschlüsselungsalgorithmus

Ein großer Vorteil des erfindungsgemäßen Verfahrens ist, dass diese mit jedem derzeit bekannten und in Zukunft verfügbaren symmetrischen Verschlüsselungsalgorithmus kompatibel ist, sprich sollten in Zukunft sichere Verfahren als AES erfunden werden, so können auch diese in dem erfindungsgemäßen Verfahrens eingebunden werden. Somit ist das erfindungsgemäße Verfahren bezüglich Verschlüsselung immer auf dem neuesten Stand.

### Selbstzerstörung der Schlüssel

Bestimmte, für die Schlüsselgenerierung notwendige Paramater, werden vorzugsweise nach einer festgelegten Zeit zerstört. Dadurch ist eine erneute Berechnung des Schlüssels nicht mehr möglich.

### Authentizität

Auch die Authentizität einer in dem erfindungsgemäßen Verfahrens bekannten Instanz kann ohne große Mühen festgestellt werden. Im Beispiel 8.2 wird dies genauer Anhand eines Autos und Mobiltelefon als Schlüssel beschrieben.

### Ziel des erfindungsgemäßen Verfahrens

Das primäre Ziel des Verfahrens ist es, den Datenschutz bestehender IT Systeme und Anwendungsfelder zu verbessern. Das erfindungsgemäße Verfahren lässt sich daher in einer Vielzahl von Systemen integrieren.

Aufbau des Systems zur Anwendung des erfindungsgemäßen Verfahrens:
- Verschlüsselungsauthorität (VA):
   Hierbei handelt es sich um das System, welches die zentrale Stelle zur Vergabe von Parametern für die Schlüsselerstellung betreibt.
- Main Chain:
   Basierend auf Blockchain Technologie handelt es sich hierbei um die Verkettung von Blöcken, welche den Hashwert der verschlüsselten Nachricht und den Token zur Generierung (siehe Generierung von Schlüsseln) jeweils pro Block in der VA sichert.
- Private Chain (pro Gerät):
   Jedes Gerät (Sender und Empfänger) speichert seine eigene Blockchain. Somit erhält jedes Gerät nur Informationen, die auch für den eigenen Gebrauch bestimmt sind und keine Informationen zu anderen Schlüsseln. Das Gerät sichert den Hashwert der unverschlüsselten Nachricht pro Block.

### Kurze Beschreibung des Hauptprozesses:

Hier werden Informationen zur Schlüsselerstellung abgefragt. Somit beantragt der Sender zuerst einen Token von der Encryption Authority. Dieser Token wird benötigt um einen privaten Schlüssel zu erstellen. Zudem wird der Hashwert der letzten unverschlüsselten Nachricht benötigt. Dieser befindet sich in der privaten Chain des Senders. Um sicherzustellen, dass ein Hash verwendet wird, welcher dem Empfänger auch bekannt ist, gibt die VA einen GUID (Global Unique Identifier) zurück, anhand dessen der Sender den Hashwert in der privaten Chain ermitteln kann. Nun kann der private Schlüssel durch Kombination von Token und Hashwert generiert werden und die Nachricht mit diesen verschlüsselt versendet werden. Der Hashwert der unverschlüsselten Nachricht wird im nächsten Block der privaten Chain gesichert und kann damit für die nächste Verschlüsselung, nach einer Empfangsbestätigung, verwendet werden. Anschließend sichert auch die VA einen Block für diese Transaktion in der Main Chain. Hier sichert diese den Hashwert der verschlüsselten Nachricht, sowie weitere grundlegende Daten.

### Empfang der Nachricht und Entschlüsselung

Nach dem Empfang einer verschlüsselten Nachricht wird dies zunächst, mit Hashwert der verschlüsselten Nachricht, in der privaten Chain des Empfängers gesichert. Darauf erfolgt eine Überprüfung der Integrität der Daten d.h. nach einer Änderung der Daten während der Kommunikation wird gesucht. Dafür überprüft die Encryption Authority den Hashwert der verschlüsselten Nachricht mit dem Hashwert der empfangenen Nachricht. Sollten sich Abweichungen feststellen lassen, so ist dies ein Indiz für eine Verletzung der Integrität (siehe Integritätsverletzung). Liegt keine Integritätsverletzung vor, so wird das Token durch die Encryption Authority geladen, dieses mit dem Hashwert der letzten entschlüsselten Nachricht der letzten Transaktion kombiniert und dadurch der Schlüssel errechnet. Nun kann die Nachricht entschlüsselt werden.

### Aufbau der Chains

Das erfindungsgemäße Verfahren (Private Self Destroying Encryption Chain, kurz: PSDE chain) arbeitet auf Basis der Blockchain Technologie. Hier wird zwischen der private - und der main chain unterschieden. Während die main chain durch die VA verwaltet wird, sind die Daten der private chain auf jedem Gerät (Sender und Empfänger) unterschiedlich. Im Folgenden wird der Aufbau der jeweiligen Blöcke genauer aufgezeigt.

### Space Chain Block

Bei einem Space Block handelt es sich um eine Platzfüller der privaten chain. Da in der privaten chain nur Blöcke gesichert werden, die für den jeweiligen Sender und Empfänger relevante Informationen enthalten, werden evtl. dazwischenliegende Blöcke automatisch durch die VA zusammengefasst.

### Selbstzerstörung von privaten Schlüsseln

Ein weiterer Vorteil der PSDE Chain ist die Selbstzerstörung von privaten Schlüsseln nach einem festgelegtem Zeitintervall. So überprüft die Encryption Authority nach einer gegebenen Zeit abgelaufene Blöcke und löscht anschließend die Tokens. Da für die Berechnung der Schlüssel der Token essentiell notwendig ist, ist es somit nicht mehr möglich den Schlüssel zu errechnen.

### Beispiele

### - Übermittlung von digitalen Informationen in Text- oder Medienform (Chat)

Gerade bei der digitalen Übertragung sensibler Daten (Kreditkarteninformationen, Firmendokumente) spielt die Verschlüsselung, sowie der Schutz vor unberechtigter Veränderung eine essentielle Rolle. Dank der PSDE Chain kann hiermit ein umfassender Schutz geboten werden. Zudem lässt sich diese leicht in bestehende Anwendungen integrieren.

### - Kommunikation zwischen Gegenständen (Internet of Things)

Da auch die Kommunikation von Daten zwischen Gegenständen im Zeitalter des 21. Jahrhunderts immer mehr in den Vordergrund rückt, ist es umso wichtiger die Kommunikation zu schützen, um Diebstahl und Missbrauch von Gegenständen zu vermeiden. So kann das Verfahren beispielsweise zwischen Auto und Mobiltelefon (als Schlüssel) verwendet werden ohne lange Wartezeiten in Kauf nehmen zu müssen. Hierbei generiert das Fahrzeug einen zufälligen Text und verschlüsselt und überträgt diesen nach dem erfindungsgemäßen Verfahren. Nach Rückgabe des richtig entschlüsselten Textes kann das Auto entsperrt werden. Aus den Hashwerten der letzten Nachrichten in der private Chain werden nun, mit Hilfe des Tokens der VA, für die nächste Kommunikation neue private Schlüssel erstellt. Somit ist die Kommunikation zwischen Fahrzeug und Mobiltelefon immer auf höchstem Standard gesichert und in diesem Falle auch die Authentizität des Schlüssels sichergestellt.

### Weitere mögliche Variante:

### - Virtual Private Network (VPN) Verbindung

Auch bei VPN Verbindungen treten oftmals gravierende Sicherheitslücken auf und Schlüssel werden teils viel zu selten gewechselt. Durch die PSDE Chain ist es möglich auch VPNs mit ständig wechselnden privaten Schlüsseln zu sichern. Im folgenden Beispiel wird dies anhand eines Site-to-Site VPNs beschrieben, allerdings trifft dies auch auf alle weiteren VPN Arten zu (Point-to-Point, Point-to-Site).

### Mögliche Varianten

### - Zweistufiger Integritätscheck

Eine mögliche Variante der PSDE Chain ist es, anstatt nur den ersten Integritätscheck mit dem Server, diesen auch mit dem Empfänger durchzuführen. Somit ist die Integrität doppelt gesichert, da sowohl der Hashwert der verschlüsselten Nachricht mit der Encryption Authority, als auch der Hashwert der unverschlüsselten Nachricht mit dem Hashwert des Senders abgeglichen werden kann.

### - Verwendung auf normaler Datenbankbasis ohne Blockchain Technologie

Des Weiteren wäre auch eine Verwendung der PSDE Chain auf normaler Datenbankbasis, ohne Verwendung der Blockchain Technologie, möglich. Hierbei würden sich allerdings einige Nachteile ergeben wie z.B. eine langsame Integritätsermittlung.
- Verwendung anderer beliebiger Werte anstatt des Hashwerts der letzten Nachricht zur Schlüsselerzeugung.

Die Authentizität kann in einer vorteilhaften Weiterbildung der Erfindung auch Mithilfe eines Integritätschecks per Transaction Tree zwischen Sender und Empfänger festgestellt werden. Sollte hier eine Verletzung auftreten, wird die Datenübertragung abgebrochen und eine Fehlermeldung ausgegeben. Der Vorteil dieses Verfahrens besteht darin, dass die Authentizität ohne Verbindung zur VA durchgeführt werden kann. Dies ist zum Beispiel wichtig wenn es sich bei Sender und Empfänger um einen Kraftfahrzeugschlüssel und um ein elektronisches Zugangssystem zum Kraftfahrzeug handelt und auf die VA nur über öffentliche Funknetzwerke zugegriffen werden kann.

Eine weitere mögliche Ausgestaltung der PSDE Chain wäre, anstatt des Hashwerts der letzten unverschlüsselten Nachricht, mit anderen Werten zur Schlüsselgenerierung zu arbeiten. So könnte beispielsweise direkt die unverschlüsselte Nachricht verwendet werden, oder aber auch andere beiden Geräte bekannten Werte kombiniert werden (User ID, Größe der letzten Nachricht, etc.). Auch muss nicht zwingend mit der letzten Nachricht gearbeitet werden, sondern trifft dies alles auch auf andere Daten im Rahmen der Kommunikation zwischen Sender und Empfänger zu.
- Verwendung der PSDE Chain ohne Integritätscheck
   Beim Integritätscheck handelt es sich um einen optionalen Schritt, der aber in manchen Situationen nicht benötigt wird. Daher kann die PSDE Chain auch ohne Integritätscheck betrieben werden.
- Integritätscheck ohne Überprüfung des Transaction Trees
   Auch der Integritätscheck selbst kann ich unterschiedlichen Stufen ausgebaut werden. So ist eine Überprüfung des Transaction-Trees nur notwendig, falls die Reihenfolge der Nachrichten überprüft werden muss. Oftmals genügt aber auch schon ein Abgleich der Hashwerte und somit kann in manchen Fällen die Überprüfung mittels Transaction-Tree ausgelassen werden.

### Folgende Begriffe werden synonym verwendet: Hash - Hashwert; Client - Sender - Empfänger;

### Zum Beispiel Kraftfahrzeugzugang:

Anhand des Beispiels des Autos und Schlüssels zum entsperren, sendet der Schlüssel hierbei mit dem erfindungsgemäßen Verfahren verschlüsselte zufällige Daten an das Fahrzeug. Das Fahrzeug prüft darauf vorzugsweise durch einen zweistufigen Integritätscheck (sowohl mit Encryption Authority als auch mit dem Schlüssel) mittels Transaction Tree auf Verletzungen. Sollte es Verletzungen geben, so handelt es sich nicht um den Originalschlüssel und das Fahrzeug kann nicht entsperrt werden.

Es ist für den Fachmann offensichtlich, dass die oben beschriebenen Ausführungsformen der Erfindung in beliebiger Weise miteinander kombiniert werden können.

Die Erfindung wird nachfolgend beispielsweise anhand der schematischen Zeichnung beschrieben. In dieser zeigen:
- Fig. 1: ein Ablaufdiagramm des vorliegenden Verfahrens, und
- Fig. 2: ein Ablaufdiagramm einer Integritätsprüfung zur Durchführung in dem Verfahren nach Fig. 1.

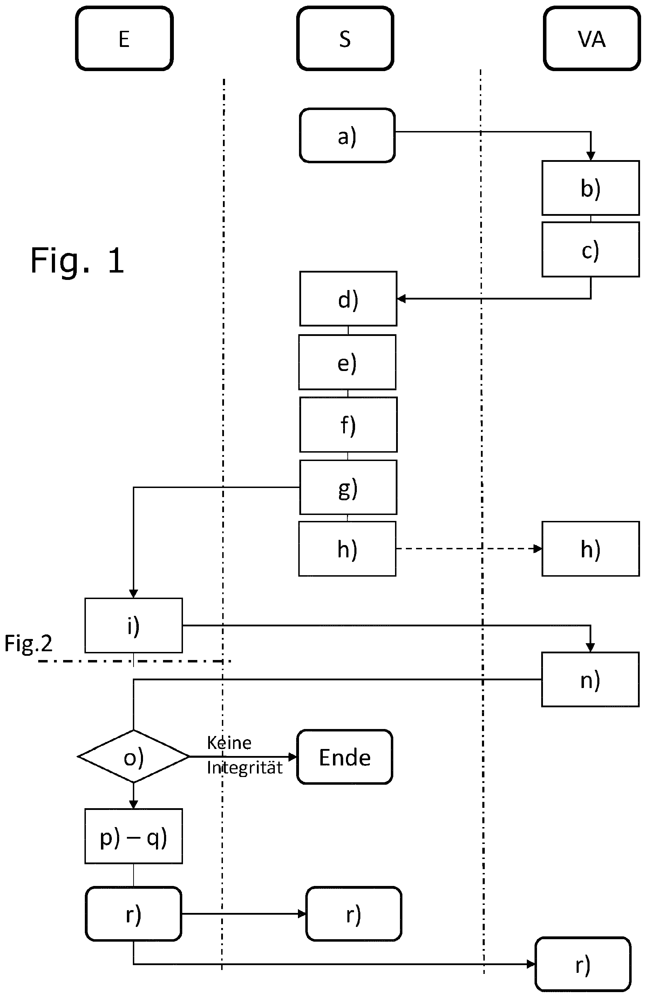

Das erfindungsgemäße Verfahren, wie es in Fig. 1 dargestellt ist, ermöglicht einen sicheren Austausch von verschlüsselten Nachrichten zwischen einem Sender S und einem Empfänger E unter Nutzung einer Verschlüsselungsautorität VA. Ein derartiges Verfahren wird vorzugsweise in einer Drittanwendung eingesetzt, in welchem Daten zwischen Sendern und Empfängern transferiert werden. Ein solches Drittsystem kann Messenger, WhatsApp^{®}, Skype^{®}, Twitter^{®} oder ein anderes derartiges System sein. Das Verfahren kann jedoch auch im Zusammenhang mit der Zugangssicherung zu Fahrzeugen, Maschinen, Geräten aller Art, Smartphones oder Desktops eingesetzt werden.

Vor einem erstmaligen Datenaustauch tauschen Sender und Empfänger einen gemeinsamen Genesishash aus, der die Basis für die nachfolgenden Verschlüsselungen darstellt. Andernfalls wird der bestätigte Hash des letzten Datenaustauschs verwendet.

Das Verfahren benutzt einerseits die Blockchain-Technologie, um Verschlüsselungsbasisdaten für jede Datenübertragung neu zu generieren und um über die Hash der Blockchain eine Integritätsüberprüfung jederzeit zu ermöglichen, zumindest aber mit jedem Datenübertragungsvorgang.

Zuerst erfragt der Sender in Schritt a) von der VA die Vergabe eines Tokens, welches als Basis für die Verschlüsselung der zu übertragenden Daten verwendet werden soll.

In Schritt b) erstellt die VA erstellt das Token und schreibt dieses in einen von der VA erstellten neuen Block, welcher ihrer Blockchain, nachfolgend main chain, angehängt wird.

Die VA gibt in Schritt c) das erstellte Token an den Sender zurück. Daraufhin erstellt der Sender in Schritt d) einen Schlüssel, welcher aus dem Token und dem letzten bestätigten Hash bzw. Genesishash abgeleitet ist und der Sender S verschlüsselt in Schritt e) eine Nachricht zur Übertragung an den Empfänger E unter Verwendung des erstellten Schlüssels. Anschließend sichert der Sender S in Schritt f) den Hash der unverschlüsselten Nachricht in einem neuen Block seiner privaten Blockchain und übermittelt in Schritt g) die verschlüsselte Nachricht an den Empfänger E. Der Sender erstellt in Schritt h) den Hash der verschlüsselten Nachricht und übermittelt ihn an die VA. Anschließend übermittelt der Empfänger in Schritt i) den Hash der verschlüsselten Nachricht an die VA und fordert eine Integritätsbestätigung von der VA an.

Die VA vergleicht daraufhin in Schritt n) die Hashs von Empfänger E und Sender S und übermittelt das Vergleichsergebnis und das Token an den Empfänger.

Im Fall der Bestätigung der Integrität durch die VA berechnet der Empfänger E in Schritt o) aus dem Token und dem zuletzt bestätigten Hash der unverschlüsselten Nachricht bzw. Genesishash den Schlüssel für das anschließende Entschlüsseln der Nachricht durch ein beliebiges Verschlüsselungsverfahren. Im Falle die Integrität nicht bestätigt wird, erfolgt an dieser Stelle der Abbruch weil die Daten zwischen Sender und Empfänger nicht konsistent sind.

Der Empfänger entschlüsselt in Schritt p) die Nachricht anhand des Schlüssels und sichert in Schritt q) den Hash der unverschlüsselte Nachricht in einem Block seiner privaten chain. Schließlich übermittelt der Empfänger E in Schritt r) eine Empfangsbestätigung für den Hash der unverschlüsselten Nachricht an den Sender S und eine Empfangsbestätigung des Hashs der verschlüsselten Nachricht an die VA für weitere Datenübertragungen, wie sie hier beschrieben wurden.

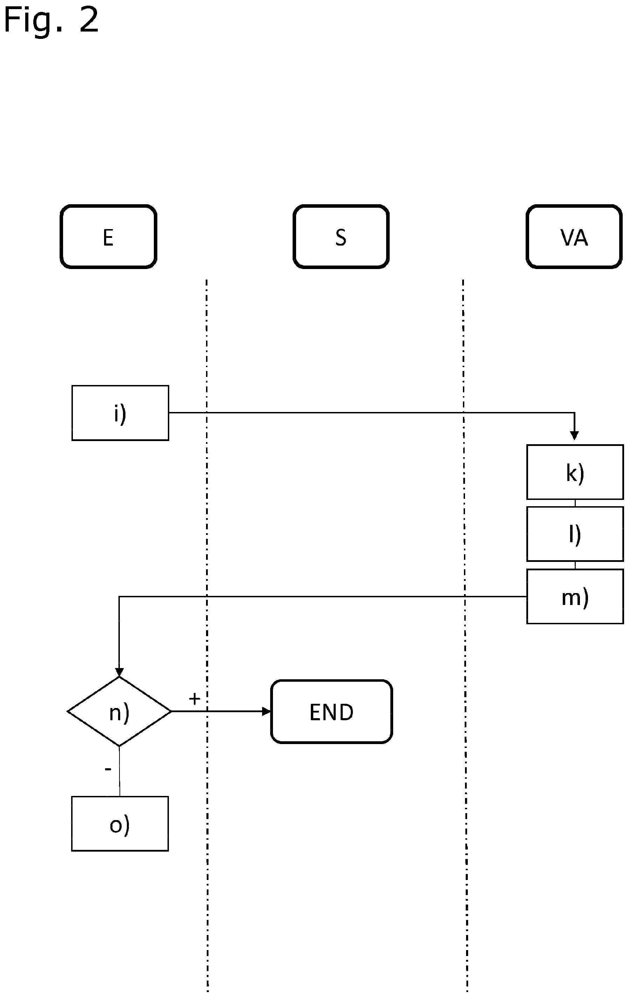

Fig. 2 zeigt eine alternative Ausführungsform des erfindungsgemäßen Verfahrens. Darin werden insbesondere zwischen den Schritten i) und n) folgende weitere Schritte durchgeführt:
k) der Empfänger basiert die Integritätsanfrage an die VA auf transaction tree (Merkle) Technologie,
l) die VA überprüft den transaction tree mittels der main chain,
m) die VA übermittelt das Ergebnis der Integritätsprüfung an den Empfänger.

Diese transaction tree-Verifizierung bietet eine erweiterte Überprüfung auf Integritätsverletzungen. So ist es möglich mittels des Merkle Tree Hashing Verfahren die gesamte Chain, das heißt main chain als auch private chains des Senders und Empfängers auf Verletzungen zu überprüfen. Hierbei wird nicht nur die aktuell empfange Nachricht mittels Hashwert auf Änderungen überprüft, sondern auch die gesamte Reihenfolge der Chain. Die Integritätsüberwachung wird somit verbessert und das erfindungsgemäße Verfahren eine Vielzahl, schwer zu manipulierender Schutzfunktionen zur Einhaltung der Integrität eines Drittsystems.

Das gesicherte Übertragungsverfahren der Erfindung wird beispielsweise anhand des Zusammenwirkens zwischen einem elektronischen funkbasierten Fahrzeugschlüssels, der Verriegelungsmechanismus am Fahrzeug und der im Fahrzeug oder auf einem Server angeordneten VA beschrieben:
a) Der Schlüssel des Fahrzeugs fordert einen Token bei der VA an. Die VA wird zum Beispiel vom Hersteller des Fahrzeuges gehostet.
b) Die VA erstellt das Token und schreibt dieses in einen von der VA erstellten neuen Block, welcher einer Blockchain der VA, nachfolgend main chain, angehängt wird.
c) Die VA gibt das erstellte Token an den Schlüssel zurück.
d) Der Schlüssel erstellt eine Chiffre, welcher aus dem Token und den Daten bzw. Startdaten, insbesondere dem letzten bestätigten Hash bzw. Genesishash abgeleitet ist
e) Der Sender (Fahrzeugschlüssel) verschlüsselt unter Verwendung des Schlüssels eine zufällig gewählte Nachricht zur Übertragung an das Fahrzeug.
f) Der Fahrzeugschlüssel sichert den Hash der unverschlüsselten Nachricht in einem neuen Block seiner privaten Blockchain.
g) Der Fahrzeugschlüssel übermittelt die verschlüsselte Nachricht an das Fahrzeug.
h) Der Fahrzeugschlüssel erstellt den Hash der verschlüsselten Nachricht und übermittelt ihn an die VA.
i) Das Fahrzeug übermittelt der VA den Hash der verschlüsselten Nachricht und fordert eine Integritätsbestätigung bei der VA an, was zum Beispiel mittels des Transaction Trees erfolgen kann.
n) Die VA überprüft die Integrität anhand des Transaction Trees und das Token an das Fahrzeug.
o) Das Fahrzeug berechnet im Fall der Bestätigung der Integrität durch die VA aus dem Token und dem zuletzt bestätigten Hash der unverschlüsselten Nachricht bzw. Genesishash den Schlüssel für das anschließende Entschlüsseln der Nachricht. Sollte es sich um eine Integritätsverletzung handeln, so wird das Fahrzeug nicht entsperrt.
p) Das Fahrzeug entschlüsselt die Nachricht anhand des Schlüssels.
q) Das Fahrzeug sichert den Hash der unverschlüsselten Nachricht in einem Block der privaten chain.

Auf diese Weise wird somit ein sicheres Entschlüsseln des Fahrzeug gewährleistet. Das Schlüsselsystem ist sicher gegen Aufzeichnungen des Funksignals, was bei keyless-go Systemen derzeit eine große Unsicherheit darstellt.

Vorzugsweise kann ein weiterer Integritätscheck mit dem Schlüssel. Erfolgen, entweder zwischen dem Sender oder Empfänger und der VA und/oder zwischen Sender und Empfänger. Sollte es sich bei einem Zugriffsversuch um einen Angreifer handeln, der z.B. lediglich das Funksignal des Schlüssels aufgezeichnet hat, so kann dieser anhand der fehlenden Blöcke der Chain nicht bestätigt werden und das Fahrzeug kann nicht entschlüsselt werden.
r) Schließlich übermittelt das Fahrzeug eine Empfangsbestätigung für den Hash der unverschlüsselten Nachricht an den Fahrzeugschlüssel und eine Empfangsbestätigung des Hashs der verschlüsselten Nachricht an die VA für weitere Transaktionen.

Ein weiteres Beispiel des erfindungsgemäßen Verfahrens wird nun anhand einer Chat App beschrieben. Es geht hier um den gesicherten Austausch von Daten zwischen Sender und Empfänger, d.h. in der Regel zwei Chat Clients, in dem Chat-system, das in der Regel von einem Drittanbieter betrieben wird, wie z.B. Messenger^{®} , Skype^{®}, Discord^{®}, Twitter^{®} etc.:
a) Der Sender des Chats fordert einen Token bei der VA an. Die VA wird von einem Server gehostet.
b) Die VA erstellt das Token und schreibt dieses in einen von der VA erstellten neuen Block, welcher einer Blockchain der VA, nachfolgend main chain, angehängt wird.
c) Die VA gibt das erstellte Token an die Chat-App zurück.
d) Die Chat-Sender erstellt einen Schlüssel, welcher aus dem Token und den Daten bzw. Startdaten, insbesondere dem letzten bestätigten Hash bzw. Genesishash abgeleitet ist.
e) Der Chat-Sender verschlüsselt unter Verwendung des Schlüssels eine im Rahmen der Chat-App zu übertragende Nachricht zur Übertragung an das Betriebssystem.
f) Der Chat-Sender sichert den Hash der unverschlüsselten Nachricht in einem neuen Block seiner privaten Blockchain.
g) Der Chat-Sender übermittelt die verschlüsselte Nachricht an den Empfänger.
h) Der Chat-Sender erstellt den Hash der verschlüsselten Nachricht und übermittelt ihn an die VA.
i) Der Chat-Empfänger übermittelt der VA den Hash der verschlüsselten Nachricht und fordert eine Integritätsbestätigung bei der VA an.
n) Die VA überprüft die Integrität anhand des Transaction Trees und das Token an den Empfänger.
o) Der Chat-Empfänger berechnet im Fall der Bestätigung der Integrität durch die VA aus dem Token und dem zuletzt bestätigten Hash der unverschlüsselten Nachricht bzw. Genesishash den Schlüssel für das anschließende Entschlüsseln der Nachricht.
p) Der Empfänger entschlüsselt die Nachricht anhand des Schlüssels.
q) Der Empfänger sichert den Hash der unverschlüsselten Nachricht in einem Block der privaten chain.
r) Der Empfänger übermittelt eine Empfangsbestätigung für den Hash der unverschlüsselten Nachricht an den Sender und eine Empfangsbestätigung des Hashs der verschlüsselten Nachricht an die VA für weitere Transaktionen.

## Patentansprüche

1. Verfahren zum sicheren Austausch von verschlüsselten Nachrichten zwischen einem Sender und einem Empfänger unter Nutzung einer Verschlüsselungsautorität (VA),
in welchem Verfahren der Sender und Empfänger vor einem ersten Datenaustausch einen Genesishash umfassende gemeinsame Startdaten austauschen, die die Basis für die nachfolgenden Verschlüsselungen darstellen, welches Verfahren die folgenden Schritte umfasst:
a) der Sender erfragt von der VA die Vergabe eines Tokens
b) die VA erstellt das Token und schreibt dieses in einen von der VA erstellten neuen Block, welcher einer Blockchain der VA, nachfolgend main chain, angehängt wird
c) die VA gibt das erstellte Token an den Sender zurück,
d) der Sender erstellt einen Schlüssel, welcher aus dem Token und aus Daten einer vergangenen Datenübertragung oder den Startdaten abgeleitet ist,
e) der Sender verschlüsselt unter Verwendung des Schlüssels eine Nachricht zur Übertragung an den Empfänger,
f) der Sender sichert den Hash der unverschlüsselten Nachricht in einem neuen Block seiner privaten Blockchain,
g) der Sender übermittelt die verschlüsselte Nachricht an den Empfänger,
h) der Sender erstellt den Hash der verschlüsselten Nachricht und übermittelt ihn an die VA,
i) der Empfänger übermittelt der VA den Hash der verschlüsselten Nachricht und fordert eine Integritätsbestätigung von der VA an,
n) die VA vergleicht die Hashs von Empfänger und Sender und übermittelt das Vergleichsergebnis und das Token an den Empfänger,
o) der Empfänger berechnet im Fall der Bestätigung der Integrität durch die VA aus dem Token und den Daten der vorangegangenen Datenübertragung oder den Genesishash umfassende gemeinsame Startdaten, insbesondere dem
zuletzt bestätigten Hash der unverschlüsselten Nachricht den Schlüssel für das anschließende Entschlüsseln der Nachricht,
p) der Empfänger entschlüsselt die Nachricht anhand des Schlüssels,
q) der Empfänger sichert den Hash der unverschlüsselte Nachricht in einem Block seiner privaten Blockchain,
r) der Empfänger übermittelt eine Empfangsbestätigung für den Hash der unverschlüsselten Nachricht an den Sender und eine Empfangsbestätigung des Hashs der verschlüsselten Nachricht an die VA für weitere Datenübertragungen.

2. Verfahren nach Anspruch 1, **dadurch gekennzeichnet, dass** die VA das Token auf Zufallsbasis erstellt.

3. Verfahren nach einem der vorhergehenden Ansprüche, **dadurch gekennzeichnet, dass** Blocks der main chain , die nicht den Sender oder Empfänger betreffen als leere space blocks übermittelt werden.

4. Verfahren nach einem der vorhergehenden Ansprüche, **dadurch gekennzeichnet, dass** die Verschlüsselung mit dem Advanced Encryption System erfolgt.

5. Verfahren nach einem der vorhergehenden Ansprüche, **dadurch gekennzeichnet, dass** jeder Block der main chain folgende Daten enthält: Sender ID, Empfänger ID, Token, Hash GUID, Hash des vorherigen Blocks, Hash der verschlüsselten Nachricht, Bestätigungsflag.

6. Verfahren nach einem der vorhergehenden Ansprüche, **dadurch gekennzeichnet, dass** jeder Block der privaten Blockchains vom Sender und/oder Empfänger folgende Daten enthält: Sender ID, Hash des vorherigen Blocks, Hash der unverschlüsselten Nachricht, Bestätigungsflag.

7. Verfahren nach einem der vorhergehenden Ansprüche, **dadurch gekennzeichnet, dass** die Token nach einer vorbestimmten Zeit den aus der main chain gelöscht werden.

8. Verfahren nach einem der vorhergehenden Ansprüche, **dadurch gekennzeichnet, dass** der Sender durch ein Zugangsschlüssel zu einem Bauwerk oder einem Fahrzeug gebildet ist, welcher eine Steuerung und eine drahtlose Funkverbindung zur VA und zum Empfänger enthält, der durch ein Fahrzeug oder eine Zugangsanordnung eines Bauwerks gebildet ist.

9. Verfahren nach einem der vorhergehenden Ansprüche, **dadurch gekennzeichnet, dass** die eigene private Blockchain eines clients (Sender oder Empfänger) und/oder des gegenüberliegenden clients (Empfänger oder Sender) für die Durchführung eines Integritätschecks verwendet wird, wofür die Hashs der unverschlüsselten Nachrichten der entsprechenden privaten chain herangezogen werden.

10. Verfahren nach einem der vorhergehenden Ansprüche, **dadurch gekennzeichnet, dass** die Schlüssel nach einer vorgegebenen Zeit zerstört werden.

## Claims

1. Method for securely exchanging encrypted messages between a sender and a recipient using an encryption authority (VA),
in which method, prior to a first data exchange, the sender and recipient exchange shared initial data comprising a genesis hash, said initial data forming the basis for subsequent encryptions, which method comprises the following steps:
a) the sender requests the issuing of a token from the VA,
b) the VA generates the token and writes it into a new block created by the VA, which is appended to a blockchain of the VA, hereinafter referred to as the main chain,
c) the VA returns the generated token to the sender,
d) the sender generates a key derived from the token and from data of a previous data transmission or from the initial data,
e) the sender encrypts a message for transmission to the recipient using the key,
f) the sender stores the hash of the unencrypted message in a new block of his private blockchain,
g) the sender transmits the encrypted message to the recipient,
h) the sender generates the hash of the encrypted message and transmits it to the VA,
i) the recipient transmits the hash of the encrypted message to the VA and requests an integrity confirmation from the VA,
n) the VA compares the hashes from the sender and the recipient and transmits the comparison result and the token to the recipient,
o) in the event of confirmation of integrity by the VA, the recipient calculates the key for subsequently decrypting the message from the token and the data of the previous data transmission or the shared initial data comprising the genesis hash, in particular from the most recently confirmed hash of the unencrypted message within the genesis hash,
p) the recipient decrypts the message using the key,
q) the recipient stores the hash of the unencrypted message in a block of his private blockchain,
r) the recipient transmits a receipt confirmation for the hash of the unencrypted message to the sender and a receipt confirmation of the hash of the encrypted message to the VA for further data transmissions.

2. Method according to claim 1, **characterized in that** the VA generates the token on a random basis.

3. Method according to one of the preceding claims, **characterized in that** blocks of the main chain that do not relate to the sender or recipient are transmitted as empty space blocks.

4. Method according to one of the preceding claims, **characterized in that** the encryption is carried out using the Advanced Encryption System.

5. Method according to one of the preceding claims, **characterized in that** each block of the main chain contains the following data: sender ID, recipient ID, token, hash GUID, hash of the previous block, hash of the encrypted message, confirmation flag.

6. Method according to one of the preceding claims, **characterized in that** each block of the private blockchains of the sender and/or recipient contains the following data: sender ID, hash of the previous block, hash of the unencrypted message, confirmation flag.

7. Method according to one of the preceding claims, **characterized in that** the tokens are deleted from the main chain after a predetermined period of time.

8. Method according to one of the preceding claims, **characterized in that** the sender is formed by an access key to a building or a vehicle, which contains a control unit and a wireless radio connection to the VA and to the recipient, which is formed by a vehicle or an access arrangement of a building.

9. Method according to one of the preceding claims, **characterized in that** the private blockchain of a client (sender or recipient) and/or the opposite client (recipient or sender) is used for performing an integrity check, for which purpose the hashes of the unencrypted messages from the respective private chain are used.

10. Method according to one of the preceding claims, **characterized in that** the keys are destroyed after a predetermined period of time.

## Revendications

1. Procédé d'échange sécurisé de messages chiffrés entre un expéditeur et un destinataire en utilisant une autorité de chiffrement (VA), dans lequel l'expéditeur et le destinataire échangent avant un premier échange de données des données initiales communes, comprenant un hachage initial, qui constituent la base des chiffrements ultérieurs, lequel procédé comprend les étapes suivantes :
a) l'expéditeur demande à la VA d'allouer un jeton,
b) la VA crée le jeton et l'inscrit dans un nouveau bloc créé par la VA, lequel est ajouté à une chaîne de blocs de la VA, ci-après dénommée chaîne principale,
c) la VA renvoie le jeton créé à l'expéditeur,
d) l'expéditeur crée une clé, qui est dérivée du jeton et des données d'une transmission de données précédente ou des données initiales,
e) l'expéditeur chiffre en utilisant la clé un message pour le transmettre au destinataire,
f) l'expéditeur sécurise le hachage du message non chiffré dans un nouveau bloc de sa chaîne de bloc privée,
g) l'expéditeur transmet le message chiffré au destinataire,
h) l'expéditeur crée le hachage du message chiffré et le transmet à la VA,
i) le destinataire transmet le hachage du message chiffré à la VA et demande à la VA une confirmation d'intégrité,
n) la VA compare les hachages du destinataire et de l'expéditeur et transmet le résultat de la comparaison ainsi que le jeton au destinataire.
o) si la VA confirme l'intégrité, le destinataire calcule la clé pour le déchiffrement ultérieur du message à partir du jeton et des données de la transmission de données précédente ou des données initiales comprenant le hachage initial, en particulier le hachage le plus récemment confirmé du message non chiffré,
p) le destinataire déchiffre le message à l'aide de la clé,
q) le destinataire sécurise le hachage du message non chiffré dans un bloc de sa chaîne de bloc privée,
r) le destinataire transmet un accusé de réception du hachage du message non chiffré à l'expéditeur et un accusé de réception du hachage du message chiffré à la VA pour des transmissions de données ultérieures.

2. Procédé selon la revendication 1, **caractérisé en ce que** la VA crée le jeton de manière aléatoire.

3. Procédé selon une des revendications précédentes, **caractérisé en ce que** les blocs de la chaîne principale, qui ne concernent ni l'expéditeur ni le destinataire, sont transmis sous forme de blocs vides.

4. Procédé selon une des revendications précédentes, **caractérisé en ce que** le chiffrement est effectué à l'aide du Système de Chiffrement Avancé.

5. Procédé selon une des revendications précédentes, **caractérisé en ce que** chaque bloc de la chaîne principale contient les données suivantes : identifiant de l'expéditeur, identifiant du destinataire, jeton, GUID de hachage, hachage du bloc précédent, hachage du message chiffré et fanion de confirmation.

6. Procédé selon une des revendications précédentes, **caractérisé en ce que** chaque bloc de la chaîne de bloc privée de l'expéditeur et/ou du destinataire contient les données suivantes : identifiant de l'expéditeur, hachage du bloc précédent, hachage du message non chiffré et fanion de confirmation.

7. Procédé selon une des revendications précédentes, **caractérisé en ce que** les jetons sont supprimés de la chaîne principale après un délai prédéterminé.

8. Procédé selon une des revendications précédentes, **caractérisé en ce que** l'émetteur est constitué par une clé d'accès à un bâtiment ou à un véhicule, qui contient un contrôleur et une connexion radio sans fil à la VA et au récepteur, qui est constitué par un véhicule ou un dispositif d'accès à un bâtiment.

9. Procédé selon une des revendications précédentes, **caractérisé en ce que** la chaîne de bloc privée d'un client (expéditeur ou destinataire) et/ou du client adverse (destinataire ou expéditeur) est utilisée pour effectuer un contrôle d'intégrité, pour lequel les hachages des messages non chiffrés de la chaîne privée correspondante sont utilisés.

10. Procédé selon une des revendications précédentes, **caractérisé en ce que** les clés sont détruites après un délai prédéterminé.
